(19) Europäisches Patentamt / European Patent Office / Office européen des brevets

(11) **EP 3 855 144 B1**

(12) **EUROPÄISCHE PATENTSCHRIFT**

(45) Veröffentlichungstag und Bekanntmachung des Hinweises auf die Patenterteilung:
**10.08.2022 Patentblatt 2022/32**

(21) Anmeldenummer: **21151160.5**

(22) Anmeldetag: **12.01.2021**

(51) Internationale Patentklassifikation (IPC):
**G01K 1/08** (2021.01) **D02J 13/00** (2006.01)
**G01K 7/16** (2006.01) **G01K 1/024** (2021.01)

(52) Gemeinsame Patentklassifikation (CPC):
**G01K 1/08; D02J 13/005; G01K 1/024; G01K 7/16;**
G01K 2217/00

(54) **VERFAHREN ZUR BESTIMMUNG DER TEMPERATUR EINES GALETTENMANTELS EINER GALETTE EINER TEXTILMASCHINE**

METHOD FOR DETERMINING THE TEMPERATURE OF A GODET CASING OF A GODET OF A TEXTILE MACHINE

PROCÉDÉ DE DÉTERMINATION DE LA TEMPÉRATURE D'UNE ENVELOPPE D'UN CONTINU D'UNE MACHINE TEXTILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2020 DE 102020101374**

(43) Veröffentlichungstag der Anmeldung:
**28.07.2021 Patentblatt 2021/30**

(73) Patentinhaber: **HANZA GmbH**
**42897 Remscheid (DE)**

(72) Erfinder: **Baader, Uwe**
**42111 Wuppertal (DE)**

(74) Vertreter: **karo IP**
**karo IP Patentanwälte**
**Kahlhöfer Rößler Kreuels PartG mbB**
**Platz der Ideen 2**
**40476 Düsseldorf (DE)**

(56) Entgegenhaltungen:
**JP-A- 2015 220 051**

**Beschreibung**

Die vorliegende Erfindung betrifft ein Verfahren zur Bestimmung der Temperatur eines Galettenmantels einer Galette einer Textilmaschine, sowie eine Galettenanordnung für eine Textilmaschine, aufweisend ein Steuergerät, welches zur Durchführung des Verfahrens eingerichtet ist.

Eine Textilmaschine umfasst mindestens eine Galette mit einem Galettenmantel, der durch eine Spulenanordnung induktiv beheizt wird. Der Galettenmantel dient zum Heizen und Führen von mindestens einem Faden oder Band, wobei die Temperatur des Galettenmantels auf +- 1°C genau geregelt werden muss, um dem Faden oder Band bestimmte physikalische Eigenschaften zu verleihen.

JP 2015 220051 A offenbart ein Verfahren zur Bestimmung der Temperatur eines Mantels einer Walze, die von im Mantel induzierten Wirbelströmen beheizbar ist.

Die Temperatur des Galettenmantels wird bisher derart geregelt, dass die Temperatur des Galettenmantels durch eine Temperatursensorik erfasst wird, und dann die Heizleistung, die dem Galettenmantel zugeführt wird, durch ein Steuergerät auf Basis der erfassten Temperatur geregelt wird. Die Temperatursensorik ist meistens direkt mit dem Galettenmantel mitrotierend verbunden. Dafür wird ein zusätzliches Drehübertragungssystem zum Übertragen der Messwerte benötigt. Die Temperatursensorik kann auch mit dem feststehenden Teil der Galette verbunden sein, wobei an der rückseitigen Stirnseite des Galettenmantels eine umlaufende Nut in den Galettenmantel eingearbeitet ist, in welche die Temperatursensorik hineinragt. Allerdings bringt eine in dem Galettenmantel angeordnete Nut eine Strukturschwächung des Galettenmantels mit sich. Somit sind hohe Drehzahlen, wie sie für hochproduktive Fadenprozesse verwendet werden, mit derart geschwächten Galetten ohne Bruchgefahr nicht möglich. Um diesen Nachteil zu überwinden, kann die Temperatursensorik auch außerhalb des Galettenmantels angeordnet sein, dafür ist aber eine Wärmeabschirmung und/oder ein Windableitschirm erforderlich.

Wie oben erwähnt, wird die Temperatur des Galettenmantels bisher durch eine Temperatursensorik erfasst, welche an oder neben dem Galettenmantel angeordnet ist. Daraus resultiert ein hoher Materialaufwand. Anderseits ist es allgemein bekannt, dass elektrische Leiter mit zunehmender Temperatur einen höheren elektrischen Widerstand aufweisen. Gleichwohl bezieht sich ein induktiv beheizbarer Galettenmantel ohnehin auf ein elektrisches Gesamtsystem. Daher ist es denkbar, dass die Temperatur des Galettenmantels durch Messung der Impedanz des elektrischen Gesamtsystems aus Strom und Spannung bestimmt wird. Dadurch könnte die oben beschriebene Temperatursensorik, und der damit verbundene Aufwand entfallen.

In der Vergangenheit hat sich dieser Ansatz allerdings als nicht präzise genug erwiesen, um die Temperaturmessung erfolgreich durchführen zu können, insbesondere weil eine Isolierung des elektrischen Widerstandes des Galettenmantels nicht möglich ist.

Hiervon ausgehend wird hier ein besonders vorteilhaftes Verfahren zur Bestimmung der Temperatur eines induktiv beheizbaren Galettenmantels einer Galette einer Textilmaschine beschrieben. Vorteilhafte Weiterbildungen sind in den abhängigen Patentansprüchen angegeben. Die Beschreibung, insbesondere im Zusammenhang mit den Figuren, erläutert die Erfindung und gibt weitere vorteilhafte Ausführungsvarianten an. Die in den Patentansprüchen einzeln genannten Merkmale können beliebig miteinander kombiniert und/oder mit Merkmalen der Beschreibung präzisiert/ausgetauscht werden.

Hier beschrieben wird ein Verfahren zur Bestimmung der Temperatur eines Galettenmantels $T_{Mantel}$ einer Galette einer Textilmaschine, wobei der Galettenmantel mit Hilfe von im Galettenmantel induzierten Wirbelströmen beheizbar ist, wobei die Wirbelströme von mindestens einer Induktionsspule mit einer Induktionsstromversorgung erzeugt werden, wobei Induktionsspule, Induktionsstromversorgung und Galettenmantel ein elektrisches Gesamtsystem bilden und das Verfahren die folgenden Schritte aufweist:

a) Beaufschlagung der Induktionsstromversorgung mit einem Gleich-Strom-Spannungssignal $U_{DC}$, Erfassen eines resultierenden Gleich-Stroms $I_{DC}$ und Ermittlung eines Ersatzgleichstromwiderstands $R_{ErsatzDC}$ des elektrischen Gesamtsystems;

b) Beaufschlagen der Induktionsstromversorgung mit einem Messspannungssignal $U_{mess}$ mit einer Betriebsfrequenz F, Erfassen eines resultierenden Wechselstroms $I_{mess}$ und Ermittlung eines reellen Anteils $Rel(Z_{mess})$ einer Gesamtimpedanz $Z_{mess}$ des elektrischen Gesamtsystems;

c) Berechnen eines korrigierten Ersatzgleichstromwiderstands $R_{Ersatz\omega}$ aus dem Ersatzgleichstromwiderstand $R_{ErsatzDC}$ unter Berücksichtigung mindestens eines der folgenden Betriebsparameter:

- vorliegende Temperatur der Spule $T_{Spule}$,
- Betriebsfrequenz F;

d) Berechnen eines Mantelwiderstandes $R_M$ des Galettenmantels aus dem reellen Anteil $Rel(Z_{mess})$ der Gesamtimpedanz $Z_{mess}$, wobei die reellen Anteile der Teilimpedanzen von allen Komponenten des elektrischen Gesamtsystems außer dem Galettenmantel mit Hilfe des korrigierten Ersatzgleichstromwiderstands $R_{Ersatz\omega}$ aus Rel($Z_{mess}$) eliminiert werden.

e) Ermitteln der Temperatur des Galettenmantels $T_{Mantel}$ unter Verwendung des Mantelwiderstandes $R_M$, der Messspannungssignal $U_{mess}$ und des Wechselstroms $I_{mess}$.

Das beschriebene Verfahren wird insbesondere zum Betrieb einer Textilmaschine unter der Anwendung der induktiven Erwärmung verwendet. Dabei umfasst die Textilmaschine eine Galette mit einem induktiv beheizbaren Galettenmantel und mindestens eine Induktionsspule. Die Induktionsspule ist durch Kabel und Stecker elektrisch mit einer Induktionsstromversorgung verbunden. Der Galette mit dem Galettenmantel ist über einen Luftspalt berührungslos neben der Induktionsspule angeordnet. Wenn die Induktionsspule mit einem Wechselstrom beaufschlagt wird, bildet sich ein Wechselmagnetfeld, welches Wirbelströme im Galettenmantel induziert, sodass der Galettenmantel mittels der Wirbelströme induktiv beheizt wird.

Hier bilden die Induktionsstromversorgung, die Induktionsspule mit dem Kabel und dem Stecker, sowie die Galette mit dem Galettenmantel ein elektrisches Gesamtsystem, welches sich aus einem Primärteil und einem Sekundärteil zusammensetzt. Dabei bilden die Induktionsstromversorgung, die Induktionsspule, das Kabel und der Stecker das Primärteil. Bei der Galette mit dem Galettenmantel, handelt es sich um einen geschlossenen Stromkreis, der als das Sekundärteil über einen Luftspalt getrennt vom Primärteil vorgesehen ist. Aufgrund der induktiven Erwärmung wird elektrische Energie vom Primärteil über den Luftspalt in Form von magnetischer Energie an das Sekundärteil übertragen, wo sich die magnetische Energie in Wärmeenergie umwandelt, wenn das Primärteil mit einem Wechselstrom beaufschlagt wird.

Das elektrische Gesamtsystem wird durch eine elektrische Schaltung dargestellt, welche zumindest folgende elektrische Bauelemente bzw. Parameter umfasst, die für das beschriebene Verfahren relevant sind:

der ohmsche Widerstand der Induktionsspule: $R_{Spule}$
der ohmsche Widerstand der Zuleitung: $R_{Kabel}$
der ohmsche Widerstand des Steckers: $R_{Stecker}$
der ohmsche Widerstand des Galettenmantels: $R_M$
der induktive Widerstand der Induktionsspule: $X_h$
der induktive Widerstand des Luftspalts zwischen dem Galettenmantel und der Induktionsspule: $X_s$

Die elektrische Schaltung zeigt, dass $R_{Kabel}$, $R_{Stecker}$, $R_{Spule}$, und $X_h$ in einer Reihenschaltung verbunden sind und $R_M$ sowie $X_s$ in einer anderen Reihenschaltung verbunden sind, welche weiter parallel zu $X_h$ geschaltet ist. Daraus geht hervor, dass die Gesamtimpedanz $Z_{mess}$ des elektrischen Gesamtsystems sowohl Wirkwiderstände ($R_{Spule}$, $R_{Kabel}$, $R_{Stecker}$, $R_M$) als auch Blindwiderstände ($X_h$, $X_s$) umfasst. Dabei bleiben die Werte der Blindwiderstände ($X_h = \omega \cdot L$; $X_s = 1/\omega \cdot C$) bei einer bestimmten Frequenz unverändert, während die Werte der Wirkwiderstände mit zunehmender Temperatur größer werden. Daher kann die Temperatur des Galettenmantels $T_{Mantel}$ durch Ermittlung der Wirkwiderstände, insbesondere des Widerstands des Galettenmantels $R_M$ ermittelt werden. Um $R_M$ auf eine vereinfachte Weise zu betrachten, wird die elektrische Schaltung weiter durch eine mathematische Berechnung in ein Ersatzschaltbild umgeformt. Somit umfasst das Ersatzschaltbild die folgenden Parameter:

der Ersatzwiderstand: $R_{Ersatz}$

$$R_{Ersatz} = R_{Spule} + R_{Kabel} + R_{Stecker} \#(1)$$

die Impedanz des Galettenmantels: $Z_{Mantel}$

$$\text{J hat gefehlt.} \quad Z_{Mantel} = R_i + jX_i = \frac{X_h^2 \cdot R_M}{R_M^2 + (X_h + X_s)^2} + j\frac{X_h \cdot R_M^2 + X_h^2 \cdot X_s + X_h \cdot X_s^2}{R_M^2 + (X_h + X_s)^2} \#(2)$$

der reelle Anteil der Impedanz des Galettenmantels: $R_i$

$$R_i = \frac{X_h^2 \cdot R_M}{R_M^2 + (X_h + X_s)^2} \#(3)$$

der imaginäre Anteil der Impedanz des Galettenmantels: $X_i$

$$X_i = \frac{X_h \cdot R_M^2 + X_h^2 \cdot X_s + X_h \cdot X_s^2}{R_M^2 + (X_h + X_s)^2} \#(4)$$

die Gesamtimpedanz des elektrischen Gesamtsystems: $Z_{mess}$

$$Z_{mess} = R_{Ersatz} + R_i + jX_i \#(5)$$

der reelle Anteil der Gesamtimpedanz des elektrischen Gesamtsystems: $\text{Rel}(Z_{mess})$

$$Rel(Z_{mess}) = R_{Ersatz} + R_i \#(6)$$

der imaginäre Anteil der Gesamtimpedanz des elektrischen Gesamtsystems: $\text{Im}(Z_{mess})$

$$Im(Z_{mess}) = X_i \#(7)$$

Dabei sind $R_{Ersatz}$, $R_i$ und $X_i$ in einer Reihenschaltung verbunden, deren Summe der gemessenen Impedanz $Z_{mess}$ entspricht, welche aus einem beaufschlagten Spannungssignal und einem resultierenden Strom erfasst werden kann. Darüber hinaus ist es aus Gleichung (5) denkbar, wie der Ersatzwiderstand $R_{Ersatz}$ vorab bestimmt und eliminiert werden kann, somit verbleibt es nur $R_M$ zu betrachten, welcher für die Bestimmung der Temperatur des Galettenmantels $T_{Mantel}$ relevant ist.

Weil sich der Ersatzwiderstand $R_{Ersatz}$ nach Gleichung (1) additiv aus den ohmschen Widerständen von $R_{Spule}$, $R_{Kabel}$ und $R_{Stecker}$ zusammensetzt, kann dessen Wert grundsätzlich durch eine Gleichstrom - Messung (DC-Messung) vorab bestimmt werden. Infolgedessen wird in Schritt a) die Induktionsspule durch die Induktionsstromversorgung mit einem Gleich-Strom-Spannungssignal $U_{DC}$ beaufschlagt, und dann ein resultierender Gleich-Strom $I_{DC}$ durch ein Messgerät erfasst. Somit lässt sich der Ersatzgleichstromwiderstand $R_{ErsatzDC}$ des elektrischen Gesamtsystems wie folgt berechnen:

$$R_{ErsatzDC} = \frac{U_{DC}}{I_{DC}} \#(8)$$

In diesem Fall ist das Primärteil elektrisch neutral. Darüber hinaus wird bei der Anwendung der induktiven Erwärmung die Temperatur des Galettenmantels $T_{Mantel}$ meistens durch Einstellung der Frequenz eines beaufschlagten Strom-Spannungssignals geregelt. Dafür ist normalerweise ein Steuergerät zur Frequenzregelung erforderlich. Zur Beaufschlagung eines Geleich-Strom-Spannungssignals kann hier beispielsweise die Frequenz auf null ($\omega = 0$) eingestellt werden. Sonst ist eine separate DC-Stromversorgungseinrichtung zur Ermittlung von $R_{ErsatzDC}$ auch möglich.

Nach der Ermittlung von $R_{ErsatzDC}$ wird die Frequenz in Schritt b) auf einer Betriebsfrequenz F ($\omega \neq 0$) eingestellt, sodass die Induktionsspule durch die Induktionsstromversorgung mit einem Messspannungssignal $U_{mess}$ beaufschlagt, und ein resultierender Wechselstrom $I_{mess}$ erfasst werden kann. Auf dieser Basis lässt sich die Gesamtimpedanz $Z_{mess}$ wie folgt berechnen:

$$Z_{mess} = Rel(Z_{mess}) + Im(Z_{mess}) = \frac{U_{mess}}{I_{mess}} \#(9)$$

Aus den Gleichungen (2), (5) und (9) geht hervor, dass $Z_{mess}$ nach dem Eliminieren von $R_{Ersatz}$ der Impedanz des Galettenmantels $Z_{Mantel}$ entspricht. Dies lässt sich wie folgt darstellen:

$$Z_{Mantel} = Z_{mess} - R_{Ersatz} = R_1 + jX_1 = \frac{X_h^2 \cdot R_M}{R_M^2 + (X_h + X_s)^2} + j\frac{X_h \cdot R_M^2 + X_h^2 \cdot X_s + X_h \cdot X_s^2}{R_M^2 + (X_h + X_s)^2} \#(10)$$

Die Gleichung (10) zeigt, dass jedem $R_M$-Wert nur ein $Z_{Mantel}$-Wert zugeordnet (f($R_M$)=$Z_{Mantel}$) ist, weil $X_h$ und $X_s$ bei einer bestimmten Frequenz festgelegt sind. Daher kann der ohmsche Widerstand des Galettenmantels $R_M$ rechnerisch von der gemessen Gesamtimpedanz $Z_{mess}$ nach dem Eliminieren des vorab bestimmten Ersatzwiderstands $R_{Ersatz}$ ermittelt werden. Darüber hinaus ist jedem $R_M$-Wert gemäß den Gleichungen (3) und (10) auch nur ein $R_i$-Wert zugeordnet (f($R_M$)=$R_i$). Daher wird $R_M$ in der folgenden Beschreibung zu einer vereinfachten Darstellung als $R_i$ äquivalent betrachtet.

Für die genaue Bestimmung der Temperatur des Galettenmantels $T_{Mantel}$ ist die alleinige DC-Messung des Ersatzwiderstands $R_{Ersatz}$ in Schritt a) nicht ausreichend, weil der Ersatzwiderstand $R_{Ersatz}$ temperatur- und frequenzabgängig ist. D. h. bei gleicher Temperatur weicht der Ersatzwiderstand $R_{Ersatz}$ ab, wenn sich das beaufschlagte Spannungssignal in seiner Frequenz ändert. Oder bei gleicher Frequenz ändert sich der Ersatzwiderstand $R_{Ersatz}$ mit unterschiedlichen Temperaturen. Deshalb wird in Schritt c) ein korrigierter Ersatzgleichstromwiderstand $R_{Ersatz\omega}$ auf Basis von dem in Schritt a) ermittelten $R_{ErsatzDC}$ zumindest hinsichtlich der vorliegenden Temperatur der Spule $T_{Spule}$ und der Betriebsfrequenz F berechnet.

Die Widerstandsänderung in Abhängigkeit von der Temperatur und der Frequenz wird durch eine beispielhafte Rechnung wie folgt erläutert. Dazu werden die folgenden Parameter definiert:

gewählte Messfrequenz: $\omega 0 = 2 \cdot \pi \cdot 50000 Hz$

magnetische Feldkonstante: $\mu 0 = 1{,}256 \cdot 10^{-6} \cdot \frac{V \cdot s}{A \cdot m}$

spezifischer Widerstand von Kupfer bei 25 °C: $\rho_{Cu} = \frac{1}{56} \cdot \frac{\Omega \cdot mm^2}{m}$

spezifische Widerstandsänderung von Kupfer in Abhängigkeit von der Temperatur: $\alpha_{Cu} = 0{,}004 \cdot \frac{1}{K}$

effektiver Radius des Spulendrahtes: $r_{Dr} = 1{,}75 mm$

die Temperatur beim Messen des Ersatzgleichstromwiderstands $R_{ErsatzDC}$ in Schritt

a): $T_0 = 25$ °C

Dabei sind die Werte von $r_{Dr}$ und $T_0$ zur Ermittlung des Ersatzgleichstromwiderstands $R_{ErsatzDC}$ in Schritt a) vorgegeben, können aber bei unterschiedlichen Ausführungen unterschiedlich sein. Z. B. kann ein ohmscher Widerstand der Induktionsspule $R_{SpuleDC0}$ in Schritt a) bei $T_0 = 25$ °C, $r_{Dr} = 1{,}75 mm$ gemessen werden, wobei $R_{SpuleDC0}$ 0,1$\Omega$ beträgt. Dieser Wert ist temperaturabhängig und genügt der folgenden Gleichung:

$$R_{SpuleDC}(T_{Spule}) = R_{SpuleDC0} \cdot [1 + \alpha_{Cu} \cdot (T_{Spule} - T_0)] \#(11)$$

Dabei ist $\alpha_{Cu}$ der Temperaturkoeffizient der elektrischen Leitfähigkeit von Kupfer und allgemein bekannt.

Bei einem Wechselstrom ist der Widerstand (z. b. der ohmsche Widerstand der Spule) aufgrund eines Skineffektes frequenzabhängig, wobei nur ein Teil des Leiters stromführend ist, sodass sich der Querschnitt des Leiters verkleinert, und sich der ohmsche Widerstand erhöht. Hier kann z. B. der Skineffekt bei der Spule durch eine Leitschichtdicke hinsichtlich der Temperatur der Spule $T_{Spule}$ wie folgt dargestellt werden:

$$\delta(T_{Spule}) = \sqrt{\frac{2 \cdot \rho_{Cu} \cdot [1 + \alpha_{Cu} \cdot (T_{Spule} - T_0)]}{\mu_0 \cdot \omega_0}} \#(12)$$

Dabei ist die Frequenz auf 50000Hz festgelegt ($\omega_0 = 2 \cdot \pi \cdot 50000 Hz$). Die physikalischen Parameter von Kupfer $\rho_{Cu}$ und $\alpha_{Cu}$ sowie die magnetische Feldkonstante $\mu_0$ sind Konstanten und allgemein bekannt. Daher ist die Leitschichtdicke der Spule $\delta(T_{Spule})$ nur noch von der Temperatur der Spule $T_{Spule}$ abhängig.

Zur weiteren Berechnung ist es zweckmäßig einen $\Omega$-Faktor zu definieren, welcher das Verhältnis zwischen einer Temperatur- und Frequenzänderung und einem ohmschen Widerstand darstellt. Der $\Omega$-Faktor z. B. für den ohmschen Widerstand der Spule wird wie folgt ermittelt:

$$R_{Spule\omega}(T_{Spule}) = \rho_{Cu} \cdot [1 + \alpha_{Cu} \cdot (T_{Spule} - T_0)] \cdot \frac{Drahtl\ddot{a}nge}{Kupferfl\ddot{a}che\_mit\_Skineffekt} \#(13)$$

$$R_{SpuleDc}(T_{Spule}) = \rho_{Cu} \cdot [1 + \alpha_{Cu} \cdot (T_{Spule} - T_0)] \cdot \frac{Drahtl\ddot{a}nge}{Kupferfl\ddot{a}che\_DC} \#(14)$$

erhält man:

$$\frac{R_{Spule\omega}(T_{Spule})}{R_{SpuleDc}(T_{Spule})} = \frac{Kupferfl\ddot{a}che\_DC}{Kupferfl\ddot{a}che\_mit\_Skineffekt} \#(15)$$

mit:

$$Kupferfl\ddot{a}che\_DC = \pi \cdot r_{Dr}^2 \ \#(16)$$

$$Kupferfl\ddot{a}che\_mit\_Skineffekt = \pi \cdot r_{Dr}^2 - \pi \cdot (r_{Dr} - \delta(T_{Spule}))^2 \ \#(17)$$

final ergibt sich:

$$R_{Spule\omega}(T_{Spule}) = R_{SpuleDc}(T_{Spule}) \cdot \frac{1}{2 \cdot \frac{\delta(T_{Spule})}{r_{Dr}} - \frac{\delta(T_{Spule})^2}{r_{Dr}^2}} \#(18)$$

wobei

$$\Omega_{Faktor(T_{Spule})} = \frac{1}{2 \cdot \frac{\delta(T_{Spule})}{r_{Dr}} - \frac{\delta(T_{Spule})^2}{r_{Dr}^2}} \#(19)$$

Mit den Gleichungen (18) und (19) kann der ohmsche Widerstand der Spule $R_{Spule\omega}$ bei einem Wechselstrom mit einer festgelegten Frequenz direkt durch die Multiplikation des $\Omega$-Faktors für den ohmschen Widerstand der Spule $\Omega_{Faktor(T_{Spule})}$ mit dem vorab beim Gleichstrom bestimmten ohmschen Widerstand der Spule $R_{SpuleDC}$ berechnet werden. Dabei liegt die Temperatur der Spule $T_{Spule}$ normalerweise in einem Bereich zwischen 25°C und 250 °C.

Die Gleichungen (18) und (19) sind allgemein gültig und können auch für die ohmschen Widerstände von Kabel $R_{Kabel}$ und Stecker $R_{Stecker}$ eingesetzt werden. Allerdings spielt hier die Temperaturabhängigkeit des Kabels eine deutlich kleinere Rolle, weil sich die Temperatur des Kabels nur um ca. 30°C ändert (vgl. $T_{Spule}$ = 25 °C...250 °C). Daher wird die Temperatur des Kabels getrennt betrachtet. Dazu lässt sich der $\Omega$_Faktor für den ohmschen Widerstand des Kabels wie folgt berechnen:

$$\Omega_{Faktor1(T_{Kabel})} = \frac{1}{2 \cdot \frac{\delta(T_{Kabel})}{r_{Ka}} - \frac{\delta(T_{Kabel})^2}{r_{Ka}^2}} \#(20)$$

Dabei beträgt der effektive Radius des Kabels $r_{Ka}$ 1,5 mm ($r_{Ka}$= 1,5mm).

In einer guten Näherung wird eine Durchmesser- und Temperaturgleichheit von Kabeln und Stecker angenommen. Somit lässt sich der korrigierte Ersatzgleichstromwiderstand $R_{Ersatz\omega}$ in Schritt c) wie folgt berechnen:

$$R_{Ersatz\omega} = R_{SpuleDC}(T_{spule}) \cdot \Omega_{Faktor(T_{Spule})} + (R_{SteckerDC}(T_{Kabel}) + R_{KabelDC}(T_{Kabel})) \cdot \Omega_{Faktor1}(T_{Kabel})\#(21)$$

Nach der Gleichung (10) wird erkannt, dass die gemessene Gesamtimpedanz $Z_{mess}$ nach Eliminieren des korrigierten Ersatzgleichstromwiderstands $R_{Ersatz\omega}$ nur die Impedanz des Galettenmantels $Z_{Mantel}$ umfasst, welche den Widerstand des Galettenmantels $R_M$ als einzigen variablen Wert aufweist. Daher kann $R_M$ aus der gemessenen Impedanz $Z_{mess}$ nach Eliminieren von $R_{Ersatz\omega}$ mathematisch berechnet, und darüber hinaus die Temperatur des Galettenmantels $T_{Mantel}$ in Schritt e) auf Basis des berechneten $R_M$ in Schritt d) ermittelt werden.

In einer bevorzugten Ausführungsform ist das Messspannungssignal $U_{mess}$ ein Testsignal, welches nur zum Ermitteln der Temperatur des Galettenmantels $T_{Mantel}$ verwendet wird.

Wie weiter oben beschrieben, weicht der Wert des Ersatzwiderstands beim Wechselstrom $R_{Ersatz\omega}$ vom Wert des Ersatzwiderstands beim Gleichstrom $R_{ErsatzDC}$ ab. Dies beeinflusst die Genauigkeit für die ermittelte Temperatur des Galettenmantels $T_{Mantel}$ erheblich. Um dieses Problem zu eliminieren, werden die $\Omega$-Faktoren der jeweils betroffenen ohmschen Widerstände durch die Wahl einer festen Testfrequenz bestimmt, wobei die feste Testfrequenz bevorzugt 50kHz beträgt.

In einer weiteren bevorzugten Ausführungsform ist das Messspannungssignal $U_{mess}$ ein Heizsignal, welches zum Ermitteln der Temperatur des Galettenmantels $T_{mantel}$ und zum Beaufschlagen der Galette mit einer Heizleistung verwendet wird. Ein reines Messpannungssignal, welches auschliesslich zum Messen verwendet wird, wird hier durch ein Betriebssignal ersetzt, welches sowohl zum Durchführen der Messung als auch zum Heizen (als Heizsignal) verwendet wird. Bei diesem Betriebsignal handelt es sich dann um ein kombiniertes Messpannungssignal und Heizsignal. Dabei wird die Induktionsspule im Betrieb mit einem Messspannungssignal $U_{mess}$ mit einer Frequenz von 8,5 kHz beaufschlagt, damit eine gewünschte Temperatur des Galettenmantels $T_{Mantel}$ erzielt wird. Das Messpannungssignal $U_{mess}$ bzw. das Heizsignal kann in solchen Anwendungen beispielsweise mehr als 100 Volt Spannung aufweisen, beispielsweise ca. 250 Volt Spannung.

In Ausführungsvarianten in denen das Messspannungssignal $U_{mess}$ nicht zusätzlich als Heizsignal verwendet wird, kann das Messspannungssignal $U_{mess}$ beispielsweise eine niedrige Spannung von unter 50 Volt, (beispielsweise 12 Volt) und eine höhere Frequenz von mehr als 20 kHz (beispielsweise 50 kHz) aufweisen.

In einer weiteren bevorzugten Ausführungsform wird vor Schritt c) zur Berechnung eines reellen Anteils einer Impedanz der Induktionsspule mit $R_{ErsatzDC}$ und mit den in einem Steuergerät hinterlegten Kennwerten eine Spulentemperatur $T_{Spule}$ der Induktionsspule berechnet.

Aus den Gleichungen (19), (20) und (21) geht hervor, dass das Korrigieren des Ersatzgleichstromwiderstand $R_{Ersatz\omega}$ auf unterschiedlichen Kennwerten (Parametern) basiert, welche zum Teil vorab festgelegt sind (bspw. $\mu0$, $\rho_{Cu}$, $r_{Dr}$, $r_{Ka}$, $T_0$, $R_{SpuleDCT0}$, $R_{kabelDCT0}$, $R_{SteckerDCT0}$) und zum Teil echtzeitig erfasst werden (bspw. $T_{Mantel}$, Betriebsfrequenz F). Alle diese Kennwerte werden vor Schritt c) in einem Steuergerät abgelegt.

In einer weiteren bevorzugten Ausführungsform wird vor Schritt c) ein frequenzabhängiger Ersatzwiderstand $R_{Ersatz}$ (F) zur Berechnung eines reellen Anteils einer Impedanz der Induktionsspule aus $R_{ErsatzDC}$ in Abhängigkeit von der Betriebsfrequenz F berechnet, um den Skineffekt in Folge der Betriebsfrequenz F zu kompensieren und eine Vergleichbarkeit von $R_{ErsatzDC}$ und $Z_{mess}$ zu gewährleisten.

Im Betrieb ist die Frequenz anders als im Meßbetrieb (z.B. 8,5 kHz). Darüber hinaus wird die Temperatur des Galettenmantels meistens durch Steuerung der Frequenz des beaufschlagten Messspannungssignals geregelt. Daher basiert der echtzeitige $\Omega$-Faktor auf der echtzeitigen Betriebsfrequenz (F).

In einer weiteren bevorzugten Ausführungsform wird ein in einem Steuergerät hinterlegtes Kennfeld verwendet.

Aus den Gleichungen (19) oder (20) geht hervor, dass jedem Temperatur-Wert des Leiters bei einer bestimmten Frequenz ein $\Omega$-Faktor-Wert zugeordnet ist. Es ist denkbar, dass die Relation zwischen der Temperatur und dem zugehörigen $\Omega$-Faktor (mit unterschiedlicher Frequenz) vorab berechnet werden kann. Darüber hinaus können die Werte des $\Omega$-Faktors zusammen mit den jeweils zugehörigen Temperatur- und Frequenzwerten in einer Tabelle in einem Steuergerät abgelegt werden. Durch Erfassung des echtzeitigen Temperatur- und Frequenzwertes kann der entsprechende Wert des $\Omega$-Faktors ermittelt werden.

In einer weiteren bevorzugten Ausführungsform wird mindestens ein hinterlegter $\Omega$-Faktor zur Ermittlung von $R_{Ersatz\omega}$ verwendet, welcher ein Verhältnis eines Gleichstromwiderstandes $R_{ErsatzDC}$ mit einem frequenzabhängigen Ersatzwiderstand $R_{Ersatz\omega}$ wiedergibt.

Aus den Gleichungen (19) oder (20) geht hervor, dass der Wert eines $\Omega$-Faktors von der Temperatur und dem Radius des zugehörigen Leiters abhängt, wenn die Frequenz festgelegt ist. Darüber hinaus setzt sich der Ersatzwiderstand additiv aus $R_{Spule}$, $R_{Kabel}$ und $R_{Stecker}$ zusammen, wobei die Temperatur der Spule $T_{Spule}$ im Betrieb zwischen 25 °C und 250 °C liegen kann, während die Temperatur des Kabels und des Steckers nur um ca. 30 °C ansteigen. Des Weiteren unterscheidet sich der Radius der Spule (beispielsweise $r_{Dr}=1{,}75mm$) auch vom Radius des Kabels und des Steckers (beispielsweise $r_{Ka}=r_{Stecker}=1{,}5mm$). Deshalb wird für eine genaue Temperaturermittlung des Galettenmantels $T_{Mantel}$ bevorzugt sowohl der $\Omega$ -Faktor für die Spule als auch die $\Omega$ -Faktoren für das Kabel und den Stecker zum Korrigieren des Ersatzgleichstromwiderstands $R_{Ersatz\omega}$ in Schritt c) verwendet. Dies lässt sich durch die Gleichung (21) berechnen.

In einer weiteren bevorzugten Ausführungsform wird eine Spulentemperatur der Induktionsspule $T_{Spule}$ zur Ermittlung von $R_{Ersatz\omega}$ verwendet.

Weil die Temperatur der Spule $T_{Suple}$ im Betrieb zwischen 25 °C und 250 °C liegt, ist die Temperaturabhängigkeit des ohmschen Widerstands der Spule $R_{Spule}$ nicht zu vernachlässigen. Dafür kann bspw. eine Kurve für den $\Omega$ -Faktor der Spule in der Abhängigkeit von der Temperatur der Spule $T_{Spule}$ nach der Gleichung (19) berechnet werden. Z. B. beträgt der $\Omega$ -Faktor der Spule 3,2 bei 25 °C, und 2,4 bei 250 °C, wobei der $\Omega$ -Faktor der Spule um 25% ($\frac{3{,}2-2{,}4}{3{,}2} \cdot 100\% = 25\%$) abweicht.

Es bieten sich zwei Möglichkeiten an, um den Einfluss von $T_{Spule}$ zu berücksichtigen. Zum einen kann man die Temperatur der Spule direkt messen, weil Temperaturfühler heute ohnehin als Überwachung eingebaut sind. Zum anderen kann die Temperatur der Spule aus der Kenntnis des Ersatzgleichstromwiderstands $R_{ErsatzDC}$ bestimmt werden. Dies lässt sich wie folgt darstellen:

$$R_{ErsatzDC} = R_{SpuleDC0} \cdot \left[1 + \alpha_{Cu} \cdot (T_{Spuleist} - T_0)\right] + R_{KabelDC} \#(22)$$

$$T_{Spuleist} = \frac{R_{ErsatzDC} - R_{KabelDC} + R_{SpuleDC0} \cdot (T_0 \cdot \alpha_{Cu} - 1)}{R_{SpuleDC0} \cdot \alpha_{Cu}} \#(23)$$

In einer weiteren bevorzugten Ausführungsform werden zur Ermittlung von $R_{Ersatz\omega}$ ein Widerstand der Induktionsspule und mindestens ein Widerstand der Induktionsstromversorgung getrennt voneinander berücksichtigt. D. h. zur Ermittlung von $R_{Ersatz\omega}$ werden die ohmschen Widerstände ($R_{Spule}$, $R_{kabel}$, $R_{Stecker}$), die im $R_{Ersatz\omega}$ enthalten sind, voneinander getrennt berücksichtigt. Dabei werden insbesondere die $\Omega$ -Faktoren der jeweiligen ohmschen Widerstände voneinander getrennt bestimmt (sehe die Gleichungen (19), (20) und (21)).

In einer weiteren bevorzugten Ausführungsform umfasst die Berechnung des Mantelwiderstands $R_M$ in Schritt d) eine Berechnung einer Mantelimpedanz $Z_{Mantel}$ und eine vektorielle Subtraktion $Z_{mess}$-$Z_{Mantel}$.

Aus den Gleichungen (1) und (5) wird der reelle Anteil des Galettenmantels $R_i$ durch eine vektorielle Subtraktion $Z_{mess}$-$Z_{Mantel}$ berechnet. Dazu wird in Schritt b) eine Phase $\varphi_i$ zwischen den gemessenen $U_{mess}$ und $I_{mess}$ bestimmt, die dem Phasenverschiebungswinkel der gemessenen Gesamtimpedanz $Z_{mess}$ entspricht. Somit lässt sich $R_i$ wie folgt berechnen:

$$Z_{Mantel} = \sqrt{Z_{mess}^2 + R_{Ersatz}^2 - 2 \cdot \cos(\varphi_i) \cdot R_{Ersatz} \cdot Z_{mess}} \#(24)$$

$$\varphi ii = \text{asin}\left[\frac{Z_{mess}}{Z_{Mantel}} \cdot sin(\varphi_i)\right] \#(25)$$

$$R_i = Z_{Mantel} \cdot \cos(\varphi_{ii}) \#(26)$$

Dabei entspricht die Phase $\varphi_{ii}$ dem Phasenverschiebungswinkel der Impedanz des Galettenmantels $Z_{Mantel}$. $R_{ErsatzDC}$ wird in Schritt a) durch DC-Messung bestimmt, und in Schritt c) hinsichtlich der Temperatur und Frequenz korrigiert. $Z_{mess}$ wird in Schritt b) aus $U_{mess}$ und $I_{mess}$ gemessen.

In einer weiteren bevorzugten Ausführungsform erfolgt die Berechnung des Mantelwiderstands $R_M$ in Schritt d) durch eine Berechnung eines Gesamtwiderstandes aus einer wirksamen elektrischen Leistung $P_{Wirk}$ und dem Quadrat des wirksamen Messstromes $I_{mess}$ jeweils integriert über ein Messzeitintervall und die Subtraktion eines Ersatzwiderstandes $R_{ErsatzDC}$, $R_{Ersatz\omega}$.

Durch einen Prozessor, der Signale wie $U_{mess}(t)$ und $I_{mess}(t)$ im Zeitverlauf verarbeiten kann, kann die Berechnung des reellen Anteils der Impedanz des Galettenmantels $R_i$ deutlich vereinfacht werden. Weil eine Wirkleistung nur in den ohmschen Widerständen (d. h. hier dem reellen Anteil der Gesamtimpedanz Zmess) entstehen kann, lässt sich $R_i$ aus einer wirksamen elektrischen Leistung $P_{Wirk}$ und dem Quadrat des wirksamen Messstrom $I_{mess}$ wie folgt ermitteln:

$$R_i = \frac{P_{wirk}}{I_{mess}^2} - R_{Ersatz} \#(27)$$

Die Wirkleistung $P_{wirk}$ ergibt sich als Mittelwert des Produktes von $U_{mess}(t)$ und $I_{mess}(t)$, indem das Produkt von $U_{mess}(t)$ und $I_{mess}(t)$ über ein Messzeitintervall integriert wird und über einen (digitalen) Tiefpass erfolgt.

$$P_{wirk} = \frac{1}{n \cdot T} \cdot \int_0^{n \cdot T} U_{mess}(t) \cdot I_{mess}(t) dt \#(28)$$

Die Bildung des Quadrats des wirksamen Messstrom $I_{mess}$ kann ebenfalls über ein Messzeitintervall integriert werden und über einen (digitalen) Tiefpass erfolgen.

$$I_{mess}^2 = \frac{1}{n \cdot T} \cdot \int_0^{n \cdot T} I_{mess}(t)^2 dt \#(29)$$

Dabei entspricht T der Messfrequenzperiode $\left(T = \frac{1}{F}\right)$, n der natürlichen Zahl und das Messzeitintervall des Produktes von n und T (*Messzeitintervall = n · T*). Auf diese Weise wird die Bestimmung von Ri deutlich einfacher als die individuelle Auswertung der Größen nach Amplitude und Phase. Dies kann sowohl für die Berechnung eines korrigierten Ersatzgleichstromwiderstands $R_{Ersatz\omega}$ in Schritt c), als auch für die Messung in Schritt b) eingesetzt werden.

In einer weiteren bevorzugten Ausführungsform wird $T_{Mantel}$ mit einer Polynomfunktion berechnet, wobei der Mantelwiderstand $R_M$ als Eingangsvariable in die Polynomfunktion einfließt. Dabei beschreibt man für die messtechnische Auswertung die Umkehrfunktion zur Bestimmung von $T_{Mantel}$ (Ri) als Polynom wie folgt:

$$T_{Mantel}(R_1) = T_1 \cdot \left[ 1 + \frac{R_1(T_{Mantel})}{R_a} + \left(\frac{R_1(T_{Mantel})}{R_b}\right)^2 + \left(\frac{R_1(T_{Mantel})}{R_c}\right)^3 + ... \right] \#(30)$$

In einer weiteren bevorzugten Ausführungsform wird $T_{Mantel}$ in Schritt d) nach der Methode der kleinsten Fehler-Quadrate ermittelt. D. h. zur Bestimmung der Koeffizienten in der Gleichung (30) ist es vorteilhaft, nicht die Punkte der Kurve zu nutzen, sondern die Bestimmung nach der Methode der kleinsten Fehler-Quadrate durchzuführen.

In einer weiteren bevorzugten Ausführungsform wird eine Galettenanordnung für eine Textilmaschine beschrieben, umfassend eine Galette mit einem Galettenmantel, der mit Hilfe von im Galettenmantel induzierten Wirbelströmen beheizbar ist und aufweisend mindestens eine Induktionsspule mit einer Induktionsstromversorgung, wobei die Induktionsspule, die Induktionsstromversorgung und der Galettenmantel ein elektrisches Gesamtsystem bilden und aufweisend ein an die Induktionsstromversorgung angeschlossenes Steuergerät, welches zur Durchführung des Verfahrens nach einem der vorhergehenden Ansprüche eingerichtet ist.

Die Erfindung wird nachfolgend anhand der Figuren näher erläutert. Es zeigen:

Fig. 1 eine schematische Darstellung des elektrischen Gesamtsystems
Fig. 2 die elektrische Schaltung des elektrischen Gesamtsystems
Fig. 3 ein Ersatzschaltbild des elektrischen Gesamtsystems
Fig. 4 ein weiteres Ersatzschaltbild des elektrischen Gesamtsystems
Fig. 5 Zeigerdiagramm der Impedanzen des elektrischen Gesamtsystems in einer komplexen Ebene
Fig. 6 Graph der Funktion $\Omega$ -Faktor ($T_{Spule}$)
Fig. 7 Graph der Funktion $R_{Ersatz\omega}$($T_{Spule}$, $T_{Kabel}$)

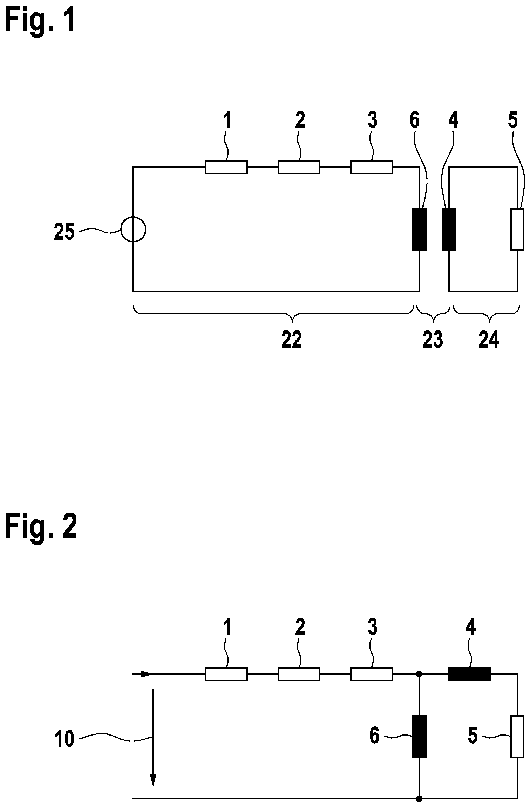

Fig.1 zeigt das elektrische Gesamtsystem, welches sich aus einem Primärteil 22 und einem Sekundärteil 24 zusammensetzt, wobei das Primärteil 22 über einen Luftspalt 23 von dem Sekundärteil 24 getrennt ist. Beim Primärteil 22 sind eine Induktionsstromversorgung 25, eine Induktionsspule in Form von einem ohmschen Widerstand $R_{Spule}$ 3 und einem induktiven Widerstand $X_h$ 6, Kabel in Form von einem ohmschen Widerstand $R_{Kabel}$ 1 und Stecker in Form von einem ohmschen Widerstand $R_{Stecker}$ 2, in einer Reihenschaltung geschaltet. Beim Sekundärteil 24 handelt es sich um einen geschlossenen Stromkreis, welcher einen Galettenmantel in Form von einem ohmschen Widerstand $R_M$ 5 und der Sekundärspule c umfasst.

Bei der Anwendung der induktiven Erwärmung wird das Primärteil 22 durch die Induktionsstromversorgung mit einem Wechselstrom beaufschlagt, dadurch wird elektrische Energie vom Primärteil 22 über den Luftspalt 23 in Form von magnetischer Energie an das Sekundärteil 24 übertragen, wo sich die magnetische Energie in Wärmeenergie umwandelt. Hingegen bleibt das Sekundärteil 24 bei der Beaufschlag mit einem Gleichstrom elektrisch neutral (d. h. keine Wirbelströme).

Fig.2 zeigt die elektrische Schaltung des elektrischen Gesamtsystems. Dabei sind $R_{Kabel}$ 1, $R_{Stecker}$ 2, $R_{Spule}$ 3, und $X_h$ 6 in einer Reihenschaltung und $R_M$ 5 sowie $X_s$ 4 in einer anderen Reihenschaltung verbunden, welche weiter parallel zu $X_h$ 6 geschaltet ist. Daraus geht hervor, dass die Gesamtimpedanz $Z_{mess}$ 10 die Wirkwiderstände von $R_{Spule}$ 3, $R_{Kabel}$ 1, $R_{Stecker}$ 2 und $R_M$ 5 getrennt von den Blindwiderständen von $X_h$ 6 sowie $X_s$ 4 aufweist.

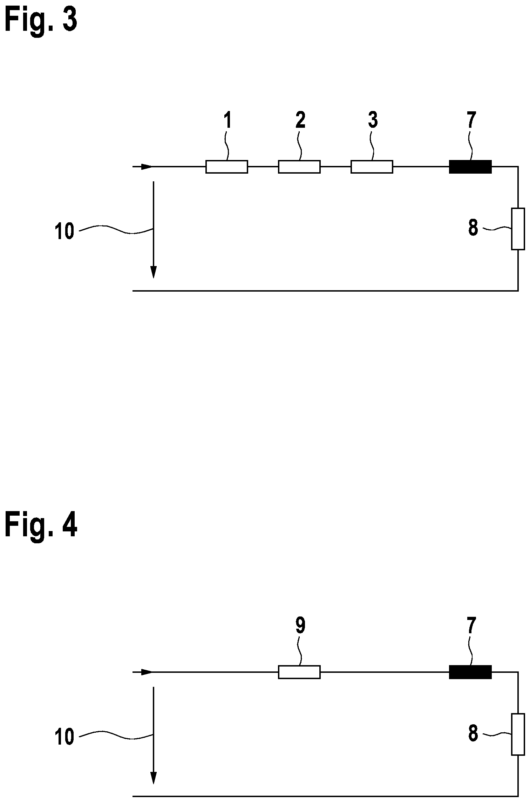

Fig 3. zeigt ein Ersatzschaltbild des elektrischen Gesamtsystems. Dabei wird der Anteil der Parallelschaltung (($R_s$4 +$R_M$ 5) // $X_h$ 6) in Fig.2 in einer Reihenschaltung ($R_i$ 8 und $X_i$ 7) umgeformt. Dadurch sind $R_{Kabel}$ 1, $R_{Stecker}$ 2, $R_{Spule}$ 3, $X_i$ 7 und $R_i$ 8 in einer Reihenschaltung geschaltet. Dabei entspricht $X_i$ 7 dem imaginären Anteil der Gesamtimpedanz $Z_{mess}$ 10 aus Spule, Spalt und Galettenmantel. $R_i$ 8 entspricht dem reellen Anteil der Gesamtimpedanz $Z_{mess}$ 10 aus Spule, Spalt und Mantel.

Fig.4 zeigt ein weiter vereinfachtes Ersatzschaltbild, wobei die ohmschen Widerstände von $R_{Spule}$ 3, $R_{Kabel}$ 1, $R_{Stecker}$ 2 als $R_{Ersatz}$ 9 zusammen gefasst werden, so dass nur $R_{Ersatz}$ 9, $R_i$ 1 und $X_i$ 7 im Stromkries verbleiben. Somit wird die Bestimmung von $R_M$ 5 über die gemessene $Z_{mess}$ 10 aus Spannung, Strom und Phasenverschiebung ermöglicht.

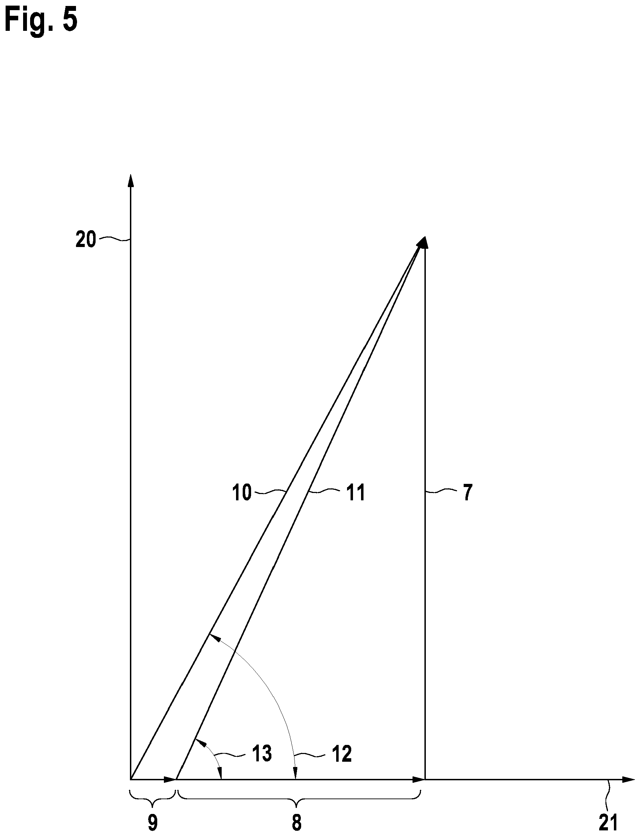

Fig. 5 zeigt einen Zeigerdiagramm über die Gesamtimpedanz $Z_{mess}$ 10 und die Mantelimpedanz $Z_{Mantel}$ 11 in einer komplexen Ebene. Dabei zeigt die $Z_{mess}$ 10 einen reellen Anteil ($R_i$ 8 + $R_{Ersatz}$9) entlang der reellen Achse 21 und einen imaginären Anteil $X_i$ 7 entlang der imaginären Achse 20 sowie einen Phasenverschiebungswinkel $\Phi_i$ 12. Die $Z_{Mantel}$ 11 zeigt ebenfalls einen imaginären Anteil $X_i$ 7 entlang der imaginären Achse 20 und einen reellen Anteil $R_i$ 8 entlang der reellen Achse 21 sowie einen Phasenverschiebungswinkel $\Phi_i$ 13. Mittels der trigonometrischen Funktion lässt sich $R_i$ 8 aus der gemessenen $Z_{mess}$ 10 und $\Phi_i$ 12 und dem vorab bestimmten $R_{Ersatz}$ 9 berechnen.

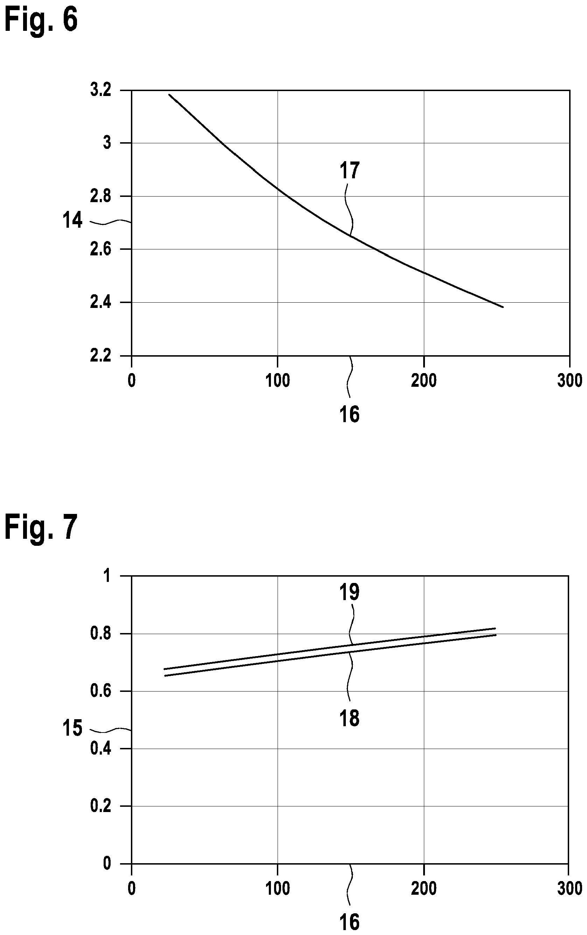

Fig. 6 zeigt einen Funktionsgraph vom $\Omega$ -Faktor ($T_{Spule}$). Dieser Funktionsgraph stellt den Skineffekt in Abhängigkeit von der Temperatur dar. Gemäß der $\Omega$ -Faktor ($T_{Spule}$)-Achse 14 sinkt der Wert des $\Omega$ -Faktors von 3,2 bis 2,2 entlang der Kurve 17, während die Spulentemperatur gemäß der $T_{Spule}$-Achse 16 von 25 °C bis 250 °C ansteigt. Daher ist die Temperaturabhängigkeit trotz des gegenkoppelnden Skineffektes nicht zu vernachlässigen.

Fig. 7 zeigt einen Funktionsgraph von $R_{Ersatz\omega}$ ($T_{Spule}$, $T_{Kabel}$). Dieser Funktionsgraph stellt $R_{Ersatz\omega}$ in Abhängigkeit der Spulentemperatur für zwei unterschiedliche Kabeltemperaturen dar, wobei eine Kabeltemperatur 25 °C und die andere Kabeltemperatur 55°C beträgt. Dabei sind zwei entlang der $R_{Ersatz\omega}$ -Achse 15 steigernde parallele Linien 18,19 vorgesehen, während die Spulentemperatur gemäß der $T_{Spule}$-Achse 16 von 25 °C bis 250 °C steigert. Dabei entspricht die Linie_a 18 einer Kabeltemperatur von 25 °C und die Linie_b 19 einer Kabeltemperatur von 55°C.

Gemäß dem Funktionsgraph von $R_{Ersatz\omega}$ ($T_{Spule}$, $T_{Kabel}$) wird eine beispielhafte Rechnung für die Genauigkeit der ermittelten Manteltemperatur in Bezug auf die Spulentemperatur sowie die Kabeltemperatur wie folgt dargestellt:
Aus Messungen ist folgendes bekannt:
$R_i$ liegt bei der gewählten Messfrequenz etwas bei 15 $\Omega$ .

Die Änderung des Widerstands liegt etwa bei $\Delta RDT_{Mantel} = 0,02 \frac{\Omega}{K}$ (D. h. alle Genauigkeitsüberlegungen müssen sich an diesem relativ kleinen Wert der Änderungen orientieren)

Bei einer unveränderten Spulentemperatur (z. B. $T_{Spule}$, =200 °C) entsteht ein Messfehler von 1,092 K, wenn die Kabeltemperatur von 25 °C bis 55°C ansteigt und die Steigerung der Kabeltemperatur nicht berücksichtigt werden würde (die Einheit °C ist äquivalent zu K). Dies lässt sich wie folgt berechnen:

$$\Delta R_{Ersatz\omega} = R_{Ersatz\omega}(200K,55K) - R_{Ersatz\omega}(200K,25K) = 0,022 \, \Omega$$

$$T_{Fehler_{Kabel}} = \frac{\Delta R_{Ersatz\omega}}{\Delta RDT_{Mantel}} = \frac{0,022 \, \Omega}{0,02 \frac{\Omega}{K}} = 1,092 \, K$$

Bei einer unveränderten Kabeltemperatur (z. B. $T_{Kabel}$=25°C) entsteht ein Messfehler von 5,619 K, wenn die Spulentemperatur von 25 °C bis 200°C ansteigt und die Steigerung der Spulentemperatur nicht berücksichtigt werden würde. Dies lässt sich wie folgt berechnen:

$$\Delta R_{Ersatz\omega} = R_{Ersatz\omega}(200K,25K) - R_{Ersatz\omega}(20K,25K) = 0{,}112\ \Omega$$

$$T_{Fehler_{Spule}} = \frac{\Delta R_{Ersatz\omega}}{\Delta RDT_{Mantel}} = \frac{0{,}112\ \Omega}{0{,}02\ \dfrac{\Omega}{\mathrm{K}}} = 5{,}619\ K$$

Bezugszeichenlist

1 $R_{Kabel}$
2 $R_{Stecker}$
3 $R_{Spule}$
4 $X_s$
5 $R_M$
6 $X_h$
7 $X_i$
8 $R_i$
9 $R_{Ersatz}$
10 $Z_{mess}$
11 $Z_{Mantel}$
12 $\Phi_i$
13 $\Phi_{ii}$
14 $\Omega$ -Faktor $(T_{Spule})$-Achse
15 $R_{Ersatz\omega}$ -Achse
16 $T_{Spule}$-Achse
17 Kurve
18 Linie_a
19 Linie_b
20 imaginäre Achse
21 reelle Achse
22 Primärteil
23 Luftspalt
24 Sekundärteil
25 Induktionsstromversorgung

**Patentansprüche**

**1.** Verfahren zur Bestimmung der Temperatur eines Galettenmantels $T_{Mantel}$ einer Galette einer Textilmaschine, wobei der Galettenmantel mit Hilfe von im Galettenmantel induzierten Wirbelströmen beheizbar ist, wobei die Wirbelströme von mindestens einer Induktionsspule (3,6) mit einer Induktionsstromversorgung (25) erzeugt werden, wobei Induktionsspule (3,6), Induktionsstromversorgung (25) und Galettenmantel ein elektrisches Gesamtsystem bilden und das Verfahren die folgenden Schritte aufweist:

a) Beaufschlagung der Induktionsstromversorgung (25) mit einem Gleich-strom-Spannungssignal $U_{DC}$, Erfassen eines resultierenden Gleichstroms $I_{DC}$ und Ermittlung eines Ersatzgleichstromwiderstands $R_{ErsatzDC}$ (9) des elektrischen Gesamtsystems;
b) Beaufschlagen der Induktionsstromversorgung (25) mit einem Messspannungssignal $U_{mess}$ mit einer Betriebsfrequenz F, Erfassen eines resultierenden Wechselstroms $I_{mess}$ und Ermittlung eines reellen Anteils $Rel(Z_{mess})$ einer Gesamtimpedanz $Z_{mess}$ (10) des elektrischen Gesamtsystems;

c) Berechnen eines korrigierten Ersatzgleichstromwiderstands $R_{Ersatz\omega}$ (9) aus dem Ersatzgleichstromwiderstands $R_{ErsatzDC}$ (9) unter Berücksichtigung mindestens eines der folgenden Betriebsparameter:

- vorliegende Temperatur der Induktionsspule $T_{Spule}$,
- Betriebsfrequenz F;

d) Berechnen eines Mantelwiderstandes $R_M$ (5) des Galettenmantels aus dem reellen Anteil $Rel(Z_{mess})$ der Gesamtimpedanz $Z_{mess}$ (10), wobei die reellen Anteile der Teilimpedanzen von allen Komponenten des elektrischen Gesamtsystems außer dem Galettenmantel mit Hilfe des korrigierten Ersatzgleichstromwiderstands $R_{Ersatz\omega}$ aus dem reellen Anteil der Gesamtimpedanz $Rel(Z_{mess})$ eliminiert werden.
e) Ermitteln der Temperatur des Galettenmantels $T_{Mantel}$ unter Verwendung des Mantelwiderstandes $R_M$ (5), des Messspannungssignals $U_{mess}$ und des Wechselstroms $I_{mess}$.

**2.** Verfahren nach Anspruch 1, wobei das Messspannungssignal $U_{mess}$ ein Testsignal ist, welches nur zum Ermitteln der Temperatur des Galettenmantels $T_{Mantel}$ verwendet wird.

**3.** Verfahren nach Anspruch 1, wobei das Messspannungssignal $U_{mess}$ ein Heizsignal ist, welches zum Ermitteln der Temperatur des Galettenmantels $T_{Mantel}$ und zum Beaufschlagen der Galette mit einer Heizleistung verwendet wird.

**4.** Verfahren nach einem der vorhergehenden Ansprüche, wobei vor Schritt c) zur Berechnung eines reellen Anteils einer Impedanz der Induktionsspule mit $R_{Er-satzDC}$ und mit den in einem Steuergerät hinterlegten Kennwerten eine Spulentemperatur $T_{Spule}$ der Induktionsspule berechnet wird.

**5.** Verfahren nach einem der vorhergehenden Ansprüche, wobei in Schritt c) zur Berechnung eines reellen Anteils einer Impedanz der Induktionsspule aus $R_{Er-satzDC}$ in Abhängigkeit von der Betriebsfrequenz (F) der frequenzabhängiger Ersatzwiderstand $R_{Ersatz\omega}$(F) berechnet wird, um den Skineffekt in Folge der Betriebsfrequenz F zu kompensieren und eine Vergleichbarkeit von $R_{ErsatzDC}$, $R_{Er-satz\omega}$ (9) und $Z_{mess}$ (10) zu gewährleisten.

**6.** Verfahren nach Anspruch 5, wobei zur Ermittlung von $R_{Ersatz\omega}$ (9) ein in einem Steuergerät hinterlegtes Kennfeld verwendet wird.

**7.** Verfahren nach Anspruch 5 oder 6, wobei zur Ermittlung von $R_{Ersatz\omega}$ (9) mindestens ein hinterlegter $\Omega$-Faktor verwendet wird, der ein Verhältnis eines Gleichstromwiderstandes $R_{ErsatzDC}$ (9) mit einem frequenzabhängigen Ersatzwiderstand $R_{Ersatz\omega}$ (9) wiedergibt.

**8.** Verfahren nach einem der Ansprüche 5 bis 7, wobei zur Berechnung von $R_{Er-satz\omega}$ (9) eine Spulentemperatur der Induktionsspule $T_{Spule}$ verwendet wird.

**9.** Verfahren nach einem der Ansprüche 5 bis 8, wobei zur Ermittlung von $R_{Ersatz\omega}$ (9) ein Widerstand der Induktionsspule und mindestens ein Widerstand der Induktionsstromversorgung (25) getrennt voneinander berücksichtigt werden.

**10.** Verfahren nach einem der Ansprüche 1 bis 9, wobei die Berechnung des Mantelwiderstand $R_M$ (5) in Schritt d) durch eine Berechnung einer Mantelimpedanz $Z_{Mantel}$ (11) und eine vektorielle Subtraktion $Z_{mess}$ (10) - $Z_{Mantel}$ (11) umfasst.

**11.** Verfahren nach einem der Ansprüche 1 bis 9, wobei die Berechnung des Mantelwiderstand $R_M$ (5) in Schritt d) durch eine Berechnung eines Gesamtwiderstandes aus einer wirksamen elektrischen Leistung $P_{Wirk}$ und dem Quadrat des wirksamen Messtroms $I_{mess}$ jeweils integriert über ein Messzeitintervall und die Subtraktion eines Ersatzwiderstandes $R_{ErsatzDC}$, $R_{Ersatz\omega}$ (9) erfolgt.

**12.** Verfahren nach einem der vorhergehenden Ansprüche, wobei in Schritt e) $T_{Man-tel}$ mit einer Polynomfunktion berechnet wird, wobei der Mantelwiderstand $R_M$ als Eingangsvariable in die Polynomfunktion einfließt.

**13.** Verfahren nach einem der vorhergehenden Ansprüche, wobei in Schritt e) $T_{Man-tel}$ nach der Methode der kleinsten Fehler-Quadrate ermittelt wird.

**14.** Galettenanordnung für eine Textilmaschine umfassend eine Galette mit einem Galettenmantel, der mit Hilfe von im Galettenmantel induzierten Wirbelströmen beheizbar ist und aufweisend mindestens eine Induktionsspule (3,6) mit einer Induktionsstromversorgung (25), wobei die Induktionsspule (3,6), die Induktionsstromversorgung (25) und der Galettenmantel ein elektrisches Gesamtsystem bilden und aufweisend ein an die Induktionsstromversorgung (25) angeschlossenes Steuergerät, welches zur Durchführung des Verfahrens nach einem der vorhergehenden Ansprüche eingerichtet ist.

**Claims**

1. Method for determining the temperature of a godet sleeve $T_{sleeve}$ of a godet of a textile machine, wherein the godet sleeve is able to be heated by way of eddy currents induced in the godet sleeve, wherein the eddy currents are generated by at least one induction coil (3, 6) having an inductive power supply (25), wherein the induction coil (3, 6), inductive power supply (25) and godet sleeve form an overall electrical system and the method comprises the following steps:

   a) applying a DC voltage signal $U_{DC}$ to the inductive power supply (25), acquiring a resultant DC current $I_{DC}$ and ascertaining an equivalent DC resistance $R_{equivalentDC}$ (9) of the overall electrical system;
   b) applying a measurement voltage signal $U_{meas}$ having an operating frequency F to the inductive power supply (25), acquiring a resultant AC current $I_{meas}$ and ascertaining a real component $Real(Z_{meas})$ of an overall impedance $Z_{meas}$ (10) of the overall electrical system;
   c) calculating a corrected equivalent DC resistance $R_{equivalent\omega}$ (9) from the equivalent DC resistance $R_{equivalentDC}$ (9), taking into consideration at least one of the following operating parameters:

      - prevailing temperature of the induction coil $T_{coil}$,
      - operating frequency F;

   d) calculating a sleeve resistance $R_M$ (5) of the godet sleeve from the real component $Real(Z_{meas})$ of the overall impedance $Z_{meas}$ (10), wherein the real components of the partial impedances of all of the components of the overall electrical system other than the godet sleeve are eliminated from the real component of the overall impedance $Real(Z_{meas})$ using the corrected equivalent DC resistance $R_{equivalent\omega}$;
   e) ascertaining the temperature of the godet sleeve $T_{sleeve}$ using the sleeve resistance $R_M$ (5), the measurement voltage signal $U_{meas}$ and the AC current $I_{meas}$.

2. Method according to Claim 1, wherein the measurement voltage signal $U_{meas}$ is a test signal that is used only to ascertain the temperature of the godet sleeve $T_{sleeve}$.

3. Method according to Claim 1, wherein the measurement voltage signal $U_{meas}$ is a heating signal that is used to ascertain the temperature of the godet sleeve $T_{sleeve}$ and to apply a heating power to the godet.

4. Method according to one of the preceding claims, wherein, before step c), a coil temperature $T_{coil}$ of the induction coil is calculated in order to calculate a real component of an impedance of the induction coil with $R_{equivalentDC}$ and with the characteristic values stored in a controller.

5. Method according to one of the preceding claims, wherein, in step c), in order to calculate a real component of an impedance of the induction coil from $R_{equivalent\omega}$, the frequency-dependent equivalent resistance $R_{equivalent\omega}(F)$ is calculated on the basis of the operating frequency (F) in order to compensate for the skin effect resulting from the operating frequency F and to ensure comparability between $R_{equivalentDC}$, $R_{equivalent\omega}$ (9) and $Z_{meas}$ (10).

6. Method according to Claim 5, wherein a characteristic diagram stored in a controller is used to ascertain $R_{equivalent\omega}$ (9).

7. Method according to Claim 5 or 6, wherein at least one stored Q-factor is used to ascertain $R_{equivalent\omega}$ (9), this Q-factor reflecting a ratio of a DC resistance $R_{equivalentDC}$ (9) and a frequency-dependent equivalent resistance $R_{equivalent\omega}$ (9).

8. Method according to one of Claims 5 to 7, wherein a coil temperature of the induction coil $T_{coil}$ is used to calculate $R_{equivalent\omega}$ (9).

9. Method according to one of Claims 5 to 8, wherein a resistance of the induction coil and at least one resistance of the inductive power supply (25) are considered separately from one another in order to ascertain $R_{equivalent\omega}$ (9).

10. Method according to one of Claims 1 to 9, wherein the calculation of the sleeve resistance $R_M$ (5) in step d) comprises calculating a sleeve impedance $Z_{sleeve}$ (11) and a vector subtraction $Z_{meas}$ (10) - $Z_{sleeve}$ (11).

11. Method according to one of Claims 1 to 9, wherein the sleeve resistance $R_M$ (5) is calculated in step d) by calculating an overall resistance from an active electric power $P_{active}$ and the square of the active measurement current $I_{meas}$ each integrated over a measurement time interval and subtracting an equivalent resistance $R_{equivalentDC}$, $R_{equivalent\omega}$ (9).

12. Method according to one of the preceding claims, wherein, in step e), $T_{sleeve}$ is calculated using a polynomial function, wherein the sleeve resistance $R_M$ is incorporated into the polynomial function as an input variable.

13. Method according to one of the preceding claims, wherein, in step e), $T_{sleeve}$ is ascertained using the least squares method.

14. Godet arrangement for a textile machine comprising a godet having a godet sleeve that is able to be heated by way of eddy currents induced in the godet sleeve, and having at least one induction coil (3, 6) having an inductive power supply (25), wherein the induction coil (3, 6), the inductive power supply (25) and the godet sleeve form an overall electrical system, and having a controller connected to the inductive power supply (25) and designed to perform the method according to one of the preceding claims.

## Revendications

1. Procédé pour déterminer la température d'une enveloppe de galette $T_{Enveloppe}$ d'une galette d'une machine textile, l'enveloppe de galette pouvant être chauffée à l'aide de courants de Foucault induits dans l'enveloppe de galette, les courants de Foucault étant générés par au moins une bobine d'induction (3, 6) avec une alimentation en courant d'induction (25), la bobine d'induction (3, 6), l'alimentation en courant d'induction (25) et l'enveloppe de galette formant un système complet électrique et le procédé comprenant les étapes savants:

   a) application à l'alimentation en courant d'induction (25) d'un signal de tension continue $U_{DC}$, détection d'un courant continu $I_{DC}$ résultant et détermination d'une résistance en courant continu de substitution $R_{mess}$ (9) du système complet électrique;
   b) application à l'alimentation en courant d'induction (25) d'un signal de tension de mesure $U_{mesure}$ avec une fréquence de fonctionnement F, détection d'un courant alternatif $I_{mesure}$ résultant et détermination d'une part réelle $Rel(Z_{mesure})$ d'une impédance totale $Z_{mesure}$ (10) du système complet électrique;
   c) calcul d'une résistance en courant continu de substitution corrigée $R_{Substitution\omega}$ (9) à partir de la résistance en courant continu de substitution $R_{substitutionDC}$ (9) en tenant compte d'au moins l'un des paramètres de fonctionnement suivants:

      - température présente de la bobine d'induction $T_{Spule}$,
      - fréquence de fonctionnement F;

   d) calcul de la résistance d'enveloppe $R_M$ (5) de l'enveloppe de galette à partir de la part réelle $Rel(Z_{mesure})$ de l'impédance totale $Z_{mesure}$ (10), les parts réelles des impédances partielles de tous les composants du système complet électrique, à l'exception de l'enveloppe de galette, étant éliminées de la part réelle $Rel(Z_{mesure})$ de l'impédance totale à l'aide de la résistance en courant continu de substitution corrigée $R_{Substitution\omega}$;
   e) détermination de la température de l'enveloppe de galette $T_{Enveloppe}$ en utilisant la résistance d'enveloppe RM (5), le signal de tension de mesure $U_{mesure}$ et le courant alternatif $I_{mesure}$.

2. Procédé selon la revendication 1, le signal de tension de mesure $U_{mesure}$ étant un signal de test qui est seulement utilisé pour déterminer la température de l'enveloppe de galette $T_{Enveloppe}$.

3. Procédé selon la revendication 1, le signal de tension de mesure $U_{mesure}$ étant un signal de chauffage qui est utilisé pour déterminer la température de l'enveloppe de galette $T_{Enveloppe}$ et pour appliquer une puissance de chauffage à la galette.

**4.** Procédé selon l'une des revendications précédentes, une température de bobine $T_{Spule}$ de la bobine d'induction étant calculée avant l'étape c) en vue du calcul d'une part réelle d'une impédance de la bobine d'induction avec $R_{substitutionDC}$ et avec les valeurs caractéristiques stockées dans un contrôleur.

**5.** Procédé selon l'une des revendications précédentes, la résistance de substitution dépendante de la fréquence $R_{Substitution\omega}$ (F) étant calculée à l'étape c) en vue du calcul d'une part réelle d'une impédance de la bobine d'induction à partir de $R_{substitutionDC}$ en fonction de la fréquence de fonctionnement (F), afin de compenser l'effet pelliculaire résultant de la fréquence de fonctionnement F et garantir une comparabilité de $R_{substitutionDC}$, $R_{Substitution\omega}$ (9) et $Z_{mesure}$ (10).

**6.** Procédé selon la revendication 5, un diagramme caractéristique stocké dans un contrôleur étant utilisé pour la détermination de $R_{Substitution\omega}$ (9).

**7.** Procédé selon la revendication 5 ou 6, au moins un facteur W stocké étant utilisé pour la détermination de $R_{Substitution\omega}$ (9), lequel restitue un rapport entre une résistance en courant continu $R_{substitutionDC}$ (9) et une résistance de substitution dépendante de la fréquence $R_{Substitution\omega}$ (9).

**8.** Procédé selon l'une des revendications 5 à 7, une température de bobine $T_{Spule}$ de la bobine d'induction étant utilisée pour le calcul de $R_{Substitution\omega}$ (9).

**9.** Procédé selon l'une des revendications 5 à 8, une résistance de la bobine d'induction et au moins une résistance de l'alimentation en courant d'induction (25) étant prises en compte séparément l'une de l'autre pour la détermination de $R_{Substitution\omega}$ (9).

**10.** Procédé selon l'une des revendications 1 à 9, le calcul de la résistance d'enveloppe RM (5) à l'étape d) comprenant un calcul d'une impédance d'enveloppe $Z_{Enveloppe}$ (11) et une soustraction vectorielle $Z_{mesure}$ (10) - $Z_{Enveloppe}$ (11).

**11.** Procédé selon l'une des revendications 1 à 9, le calcul de la résistance d'enveloppe RM (5) à l'étape d) étant effectué par un calcul d'une résistance totale à partir d'une puissance électrique active $P_{Active}$ et le carré du courant de mesure actif $I_{mesure}$, respectivement intégrés sur un intervalle de temps de mesure et la soustraction d'une résistance de substitution $R_{SubstitutionDC}$, $R_{Substitution\omega}$ (9).

**12.** Procédé selon l'une des revendications précédentes, $T_{Enveloppe}$ étant déterminée à l'étape e) avec une fonction polynomiale, la résistance d'enveloppe RM intervenant en tant que variable d'entrée dans la fonction polynomiale.

**13.** Procédé selon l'une des revendications précédentes, $T_{Enveloppe}$ étant calculée à l'étape e) selon la méthode des moindres carrés.

**14.** Arrangement de galette pour une machine textile, comprenant une galette avec une enveloppe de galette, laquelle peut être chauffée à l'aide de courants de Foucault induits dans l'enveloppe de galette et possédant au moins une bobine d'induction (3, 6) avec une alimentation en courant d'induction (25), la bobine d'induction (3, 6), l'alimentation en courant d'induction (25) et l'enveloppe de galette formant un système complet électrique et possédant un contrôleur raccordé à l'alimentation en courant d'induction (25), lequel est conçu pour mettre en œuvre le procédé selon l'une des revendications précédentes.

## Fig. 1

## Fig. 2

## Fig. 3

## Fig. 4

**Fig. 5**

## Fig. 6

## Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2015220051 A